# EUROPEAN PATENT APPLICATION

(11) **EP 4 712 043 A1**
(43) Date of publication of application: **18.03.2026**
(21) Application number: 25198322.7
(22) Date of filing: 27.08.2025
(51) Int. Cl.: G06V 10/77, G06V 10/82

(54) **METHOD, DEVICE, MEDIA AND PROGRAM PRODUCT FOR PROCESSING IMAGE**

(30) Priority: 14.09.2024 CN 202411295505
(71) Applicant: VOLKSWAGEN AG, 38440 Wolfsburg (DE)
(72) Inventor: Spiegelberg, Jakob, 38122 Braunschweig (DE); Yuzhou, Peng, 702, Beijing (CN)

(57) **Abstract**

Embodiments of the present disclosure relate to a method for processing an image, a device, a medium, and a program product. The method includes: extracting, by means of a machine learning model, features of predetermined dimensions from a source image, wherein the predetermined dimensions include a known dimension and an unknown dimension in a training dataset of the machine learning model. The method further includes: determining a feature of the unknown dimension from the features of the predetermined dimensions. The method further comprises: on the basis of the feature of the unknown dimension, generating a target image corresponding to the source image. According to the method of the present disclosure, a feature of an unknown dimension can be extracted from an image according to the content of the unknown dimension and decoupled from other features, and an image generated according to this feature of the unknown dimension can increase the saliency of the content of the unknown dimension in the source image.

## Description

### TECHNICAL FIELD

The present disclosure relates to the field of computer image processing, and more specifically, to a method for processing an image, a device, a medium, and a program product.

### BACKGROUND

Image processing technology has made significant progress in the past few years, making tasks such as image analysis, recognition, and generation more efficient and accurate. The technologies involved include deep learning, computer vision algorithms, and so on, which play an important role in fields such as medical imaging diagnosis, autonomous driving, and security monitoring. For example, in the field of autonomous driving, a deployed autonomous driving model is trained using various images that capture a variety of driving scenarios, so that the autonomous driving model can correctly respond to different driving scenarios.

### SUMMARY

Embodiments of the present disclosure provide a method for processing an image, a device, a medium, and a program product.

In a first aspect of the present disclosure, there is provided a method for processing an image. The method includes: extracting, by means of a machine learning model, features of predetermined dimensions from a source image, wherein the predetermined dimensions include a known dimension and an unknown dimension in a training dataset of the machine learning model. The method further includes: determining a feature of the unknown dimension from the features of the predetermined dimensions. The method further comprises: on the basis of the feature of the unknown dimension, generating a target image corresponding to the source image.

In a second aspect of the present disclosure, there is provided an electronic device. The electronic device comprises a processor, and a memory coupled to the processor and having instructions stored therein, wherein the instructions, when executed by the processor, cause the device to perform the steps of the method according to the first aspect of the present disclosure.

In a third aspect of the present disclosure, there is provided a computer-readable storage medium having computer-executable instructions stored thereon, wherein the computer-executable instructions, when executed, cause a computer to perform the steps of the method according to the first aspect of the present disclosure.

According to a fourth aspect of the present disclosure, there is provided a computer program product. The computer program product is tangibly stored on a non-volatile computer-readable medium and comprises machine-executable instructions, wherein the machine-executable instructions, when executed, cause a machine to perform the steps of the method according to the first aspect of the present disclosure.

It should be noted that the summary of the present invention is provided to introduce some concepts in a simplified form, and these concepts will be further described in the following detailed description. The summary is not intended to identify key or essential features of the present disclosure, nor is it intended to limit the scope of the present disclosure.

### BRIEF DESCRIPTION OF THE DRAWINGS

The above and other objectives, features, and advantages of the present disclosure will become more apparent from a more detailed description of the exemplary embodiments of the present disclosure with reference to the accompanying drawings, in which:
Fig. 1 is a schematic diagram of an exemplary application scenario of a method for processing an image according to an embodiment of the present application;
Fig. 2 shows a flowchart of a method for processing an image according to an embodiment of the present disclosure;
Fig. 3 shows a schematic diagram of a method for processing an image according to an embodiment of the present disclosure;
Fig. 4 shows a schematic diagram of the content of predetermined dimensions according to an embodiment of the present disclosure;
Fig. 5 shows a schematic diagram of a method for processing an image according to an embodiment of the present disclosure;
Fig. 6 shows a schematic diagram of a method for processing an image according to the present disclosure;
Fig. 7 shows a schematic diagram of training a machine learning model according to an embodiment of the present disclosure; and
Fig. 8 shows a schematic block diagram of a device that can be used to implement an embodiment of the present disclosure.

In the figures, identical or corresponding reference numerals denote identical or corresponding parts.

### DETAILED DESCRIPTION

Exemplary embodiments will now be described more fully with reference to the accompanying drawings. The exemplary embodiments, however, can be implemented in various forms and should not be construed as being limited to the embodiments set forth herein. Rather, these embodiments are provided to make the present application thorough and complete, and the concept of the exemplary embodiments will be fully conveyed to those skilled in the art. Identical reference numerals in the figures denote identical or similar parts, and thus repeated descriptions thereof will be omitted.

In addition, the described features, structures, or characteristics may be combined in one or more embodiments in any suitable manner. In the following description, many specific details are provided to give a full understanding of the embodiments of the present disclosure. However, those skilled in the art will appreciate that the technical solution of the present application may be practiced without one or more of the specific details, or other methods, components, devices, steps, etc. may be employed. In other cases, well-known methods, apparatuses, implementations, or operations are not shown or described in detail to avoid obscuring various aspects of the present application.

In the description of the embodiments of the present disclosure, the term "include" and its variants should be understood as open inclusion, that is, "include but not limited to". The term "on the basis of" should be understood as "at least partly on the basis of". The term "one embodiment" or "the embodiment" should be understood as "at least one embodiment". Although the terms first, second, third, etc. may be used herein to describe various components, these components should not be limited by these terms. These terms are used to distinguish one component from another. Thus, a first component to be discussed below can be referred to as a second component without departing from the teachings of the concept of the present application. As used herein, the term "and/or" and similar terms include any one, a plurality of, and all of the associated listed items in any combination.

The block diagrams shown in the figure section are merely functional entities and do not necessarily correspond to physically separate entities. That is, these functional entities may be implemented in a software form, or in one or more hardware modules or integrated circuits, or in different networks and/or processor apparatuses and/or microcontroller apparatuses.

The flowcharts shown in the accompanying drawings are merely exemplary illustrations, and do not necessarily include all the content and operations/steps, nor do they have to be performed in the described order. For example, some operations/steps may be further decomposed, and some operations/steps may be combined or partially combined. Accordingly, the actual execution order may be changed according to the actual situation.

To test or train the processing capability of an image processing model, it is usually necessary to collect images containing content of an unknown dimension and input the images into the image processing model to observe the response thereof. In the related art, developers usually manually capture images that contain content with an unknown dimension and in which the content is displayed prominently, but this is inefficient.

The inventors of the present application have found through research that many existing images, such as some images in a training dataset, contain content of unknown dimensions, but said content of unknown dimensions is not obvious due to interference from other image content, resulting in said content being discarded or ignored during training of a specified model. Hence, the present disclosure proposes a method for processing an image. The method includes: extracting, by means of a machine learning model, features of predetermined dimensions from a source image, wherein the predetermined dimensions include a known dimension and an unknown dimension in a training dataset of the machine learning model. The method further includes: determining a feature of the unknown dimension from the features of the predetermined dimensions. The method further comprises: on the basis of the feature of the unknown dimension, generating a target image corresponding to the source image. According to the method of the present disclosure, a feature of an unknown dimension can be extracted from an image according to the content of the unknown dimension and decoupled from other features, and an image generated according to this feature of the unknown dimension can increase the saliency of the content of the unknown dimension in the source image.

Basic principles and several example implementations of the present disclosure will be described below with reference to the accompanying drawings. It should be understood that these exemplary embodiments are provided only to enable those skilled in the art to better understand and further implement the embodiments of the present disclosure, and are not intended to limit the scope of the present disclosure in any manner.

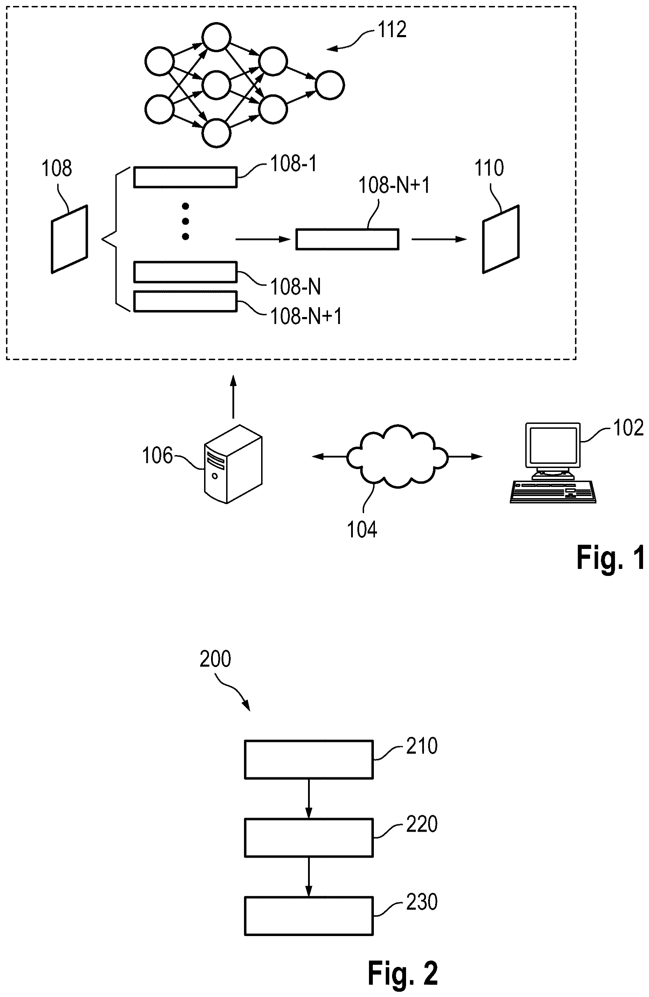

Fig. 1 is a schematic diagram of an exemplary application scenario of a method for processing an image according to an embodiment of the present application. As shown in Fig. 1, an exemplary environment 100 includes a client 102, a network 104, a server 106, a source image 108, features 108-1 to 108-(N+1) (N is a positive integer greater than 1) of preset dimensions, a target image 110, and a machine learning model 112. In this embodiment, the method for processing an image is performed by the server 106. The server 106 is deployed with the machine learning model 112, and the machine learning model 112 is utilized by the server 106 as a software entity to perform one or more operations therein. The network 102 may be, for example, a wide area network (WAN), a local area network (LAN), a wireless network, a public telephone network, an intranet, or any other type of network well-known to those skilled in the art. The communication may also be implemented via a physical line (e.g., an optical fiber or a cable). The client 102 transmits the source image 108 to the server 106 via the network 104. The method of the present disclosure is performed by the server 106 to process the source image 108.

The server 106 extracts, by the machine learning model 112, features of predetermined dimensions (108-1 to 108-(N+1), where N is a positive integer greater than 1) from the source image 108, wherein the predetermined dimensions include a known dimension and an unknown dimension in a training dataset (not shown) of the machine learning model 112. The machine learning model 112 is a trained machine learning model, and the process of training the machine learning model 112 using the training dataset may be implemented in the server 106, or may be implemented in other environments with a copy of the trained machine learning model copied to the server 106. The machine learning model 112 can decouple the content of the unknown dimension in the image from the other content, and only retain main information of the content of the unknown dimension.

The machine learning model 112 is a computational model, and is formed by connecting a large number of nodes (or referred to as neurons) to each other. Each node represents a particular output function, referred to as an activation function. Each connection between two nodes represents a weighted value for a signal passing through the connection, which is referred to as a weight. The output of the machine learning model varies depending on the connections between network layers, weight values, and activation functions in the model. The machine learning model itself is usually an approximation of a certain algorithm or function in nature.

The server 106 determines a feature of the unknown dimension from the features 108-1 to 108-(N+1) of the predetermined dimensions. The server 106 extracts, by means of the machine learning model 112, not only the feature of the unknown dimension but also features of the known dimension from the source image 108. Therefore, the server 106 needs to select the feature of the unknown dimension therefrom. In addition, the server 106 generates, on the basis of the feature of the unknown dimension, a target image 110 corresponding to the source image. Because the feature of the unknown dimension is decoupled from the other content of the image, the generated image can increase the saliency of the content of the unknown dimension. In this embodiment, a decoder may be used to generate the target image 110 from the feature of the unknown dimension. The decoder may form, together with the machine learning model 112, a larger machine learning model such as a generative adversarial network. For example, a decoder in a Vector Quantized Generative Adversarial Networks (VQGAN) network may be used to generate the target image 110 according to the feature of the unknown dimension, and the other parts in the VQGAN network may be used as the machine learning model 112.

In the application scenario shown in Fig. 1, a method for processing an image according to some embodiments of the present disclosure is implemented on the server 106, but this is only illustrative and not restrictive. The method for processing an image according to some embodiments of the present disclosure may also be implemented on other entities with sufficient computing resources and computing capabilities, for example, a client 102 with sufficient computing resources and computing capabilities. Certainly, the method may also be partially implemented on the server 106 and partially implemented on the client 102, which is not restrictive.

As understood by those of ordinary skill in the art, an instance of the server 106 may be an independent physical server, or a server cluster or a distributed system formed by a plurality of physical servers, or a cloud server that provides basic cloud computing services such as a cloud service, a cloud database, cloud computing, a cloud function, cloud storage, a network service, cloud communication, a middleware service, a domain name service, a security service, a CDN, big data, and an artificial intelligence platform. The terminal and the server may be directly or indirectly connected by means of wired or wireless communication, which is not limited in the present application. The server 106 may form a part of a distributed system. It can be understood that the distributed system is a system consisting of a plurality of nodes, and these nodes may be computers, servers, or other processing nodes, which are connected to each other via a network and work cooperatively. In the distributed system, a user usually faces a unified service entry, and a plurality of nodes behind the entry jointly provide this service. These nodes may be located at different physical locations, and communicate and coordinate through messaging. The distributed system may process and store data and share the data among different nodes to achieve higher availability, reliability, and performance. In addition, the distributed system may be used to perform a variety of tasks including, but not limited to, data processing, storage management, scientific computing, etc.

The client 102 may be any type of mobile computing device, including a mobile computer (e.g., a personal digital assistant (PDA), a laptop computer, a notebook computer, a tablet computer, a netbook, etc.), a mobile phone (e.g., a cellular phone, a smartphone, etc.), a wearable computing device (e.g., a smart watch, a head-mounted device including smart glasses, etc.), or other types of mobile devices. In some embodiments, the client 102 may also be a stationary computing device, such as a desktop computer, a game console, a smart television, etc. In addition, when the application scenario 100 includes a plurality of clients 102, the plurality of clients 102 may be computing devices of the same type or different types.

The schematic diagram of the exemplary environment 100 in which a method and/or process according to an embodiment of the present disclosure can be implemented has been described above with reference to Fig. 1. A flowchart of a method 200 for processing an image according to an embodiment of the present disclosure will be described below with reference to Fig. 2. Fig. 2 illustrates the flowchart of the method 200 for processing an image according to an embodiment of the present disclosure. The method 200 may be implemented on the server 106 shown in Fig. 1. As shown in Fig. 2, the method for processing an image according to some embodiments of the present disclosure may include blocks 210 to 230.

At block 210, features of predetermined dimensions are extracted from a source image by means of a machine learning model, wherein the predetermined dimensions include a known dimension and an unknown dimension in a training dataset of the machine learning model. As described with respect to Fig. 1, the machine learning model is a type of computational model, and is formed by a large number of nodes (or referred to as neurons) connected to each other. As an example, the machine learning model may include a generative adversarial network.

The predetermined dimensions may be a plurality of dimensions (e.g., N+1 dimensions in Fig. 1). The predetermined dimensions include known dimensions and unknown dimensions. For example, a known dimension may be a vehicle perspective dimension, a brightness dimension, or a distance dimension, where the vehicle perspective dimension indicates a driving angle of a vehicle in the image relative to the ego vehicle. Other dimensions such as a road dimension, a pedestrian dimension, and a tree dimension may belong to the unknown dimensions. Correspondingly, a value in a known dimension indicates a feature in the known dimension; for example, a certain vector value in the brightness dimension indicates a brightness value of about 1,000 lumens, and a value in an unknown dimension indicates a feature in the unknown dimension. The value here may be represented in various manners, for example, it may be a vector or a scalar. The present disclosure does not impose any restriction in this regard.

The source image may be an image in any format, and the source image may have the content of known and unknown dimensions in the training dataset of the machine learning model. For example, the source image may reflect traversal through a forest. If trees belong to an unknown dimension, then the source image includes content of the unknown dimension.

At block 220, a feature of the unknown dimension is determined from the features of the predetermined dimensions. Since it is impossible to know which of the extracted features of the predetermined dimensions are features of the known dimension and which are features of the unknown dimension, it is necessary to select from the features of these dimensions so that the feature of the unknown dimension can be selected. This is because when some machine learning models (e.g., a model including a generative network, or a model including a generative adversarial network) are used, the features of predetermined dimensions of the source image are simultaneously extracted, rather than being extracted separately by the machine learning model for each dimension. Furthermore, these features of the predetermined dimensions do not have identifiers, so it is impossible to directly know which feature corresponds to which dimension. Therefore, it is necessary to determine the feature of the unknown dimension from the features of the predetermined dimensions. There may be a plurality of specific determination methods, for example, individually analyzing the feature direction and magnitude of each dimension; for another example, matching the feature of each dimension with an embedding space in the machine learning model, and so on.

At block 230, a target image corresponding to the source image is generated on the basis of the feature of the unknown dimension. This operation is a process of restoring an image according to features, and may be implemented, for example, by means of a decoder. For example, the decoder may include a combination of a plurality of upsampling layers, fully connected layers, and activation function layers. The feature of the unknown dimension mainly reflects the content of the unknown dimension in the source image. Generally, the feature of the unknown dimension can be decoupled from other features of the known dimension, and only represents the content of the unknown dimension. Even if they are not completely decoupled, the feature of the unknown dimension can also discard a large amount of the content of the known dimension.

According to the method of the present disclosure, a feature of an unknown dimension can be extracted from an image according to the content of the unknown dimension and decoupled from other features, and an image generated according to this feature of the unknown dimension can increase the saliency of the content of the unknown dimension in the source image.

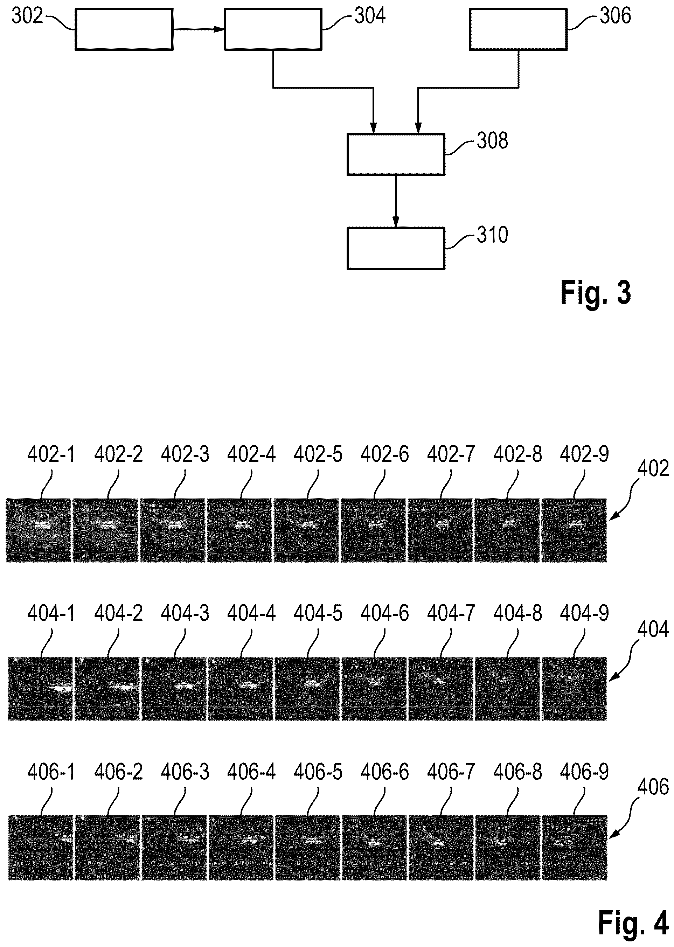

Fig. 3 shows a schematic diagram of a method for processing an image according to an embodiment of the present disclosure. At 302, a plurality of source images are obtained. These source images may not have labels, but should include the content of predetermined dimensions. The content of the predetermined dimensions includes the content of a known dimension and the content of an unknown dimension for a machine learning model. For example, the source images may include pedestrian-related content as the content of an unknown dimension, and brightness-related content as the content of a known dimension.

Fig. 4 shows a schematic diagram of the content of predetermined dimensions according to an embodiment of the present disclosure, wherein a brightness dimension 402 and a distance dimension 404 are known dimensions, and a vehicle perspective dimension 406 is an unknown dimension. The nine source images in the brightness dimension 402 include decreasing brightness content, with 402-1 being the brightest and 402-9 being the darkest. The nine images in the distance dimension 404 include decreasing distance content, with 404-1 being the closest and 404-9 being the farthest. The nine images in the vehicle perspective dimension 406 include vehicle perspective content with decreasing vehicle perspectives, with 406-1 having the largest vehicle perspective, and 406-9 having the smallest vehicle perspective (the perspective of the vehicles in the images is substantially parallel to the perspective of the ego vehicle).

Referring back to Fig. 3, at 304, features of the predetermined dimensions are extracted from the source images by the machine learning model. In some embodiments, the machine learning model is a generative model that includes a generator. The generative model can simultaneously extract (N+1) features, which can improve efficiency. Meanwhile, the (N+1) features are extracted by using the same model, so that the features can be well decoupled. In some embodiments, the machine learning model is a generative adversarial model (e.g., VQGAN) including a generator and a discriminator, and the generative adversarial model compresses the source images into a first matrix. The first matrix is an abstract representation of the content of the source images, that is, by decoding the first matrix, images with content consistent with that of the source images can be obtained.

In this embodiment, the generative adversarial model updates the first matrix by performing matching for features of respective dimensions in the first matrix against a plurality of discrete features in a codebook of the generative adversarial model. The codebook is also referred to as an embedding space, and reflects the understanding of a training dataset by the generative adversarial model during training. The codebook includes a plurality of discrete vectors, where "discrete" means low coupling between vectors, and a vector may indicate the content of a single dimension. After generating a plurality of features for the source images, the generative adversarial model may have a computational deviation, and needs to be updated using the discrete vectors in the codebook. Here, it is possible to calculate which feature in the codebook is closest to an extracted feature, and by replacing that feature with the closest feature, a feature of one dimension can be obtained. By performing such matching processing on each extracted feature, the first matrix can be updated. In this embodiment, the generative adversarial model uses the features of respective dimensions in the updated first matrix as the features of the predetermined dimensions. The updated features are usually represented uniformly as a matrix, and to implement independent analysis of the features, the matrix needs to be split into a plurality of features, and the plurality of features are the features of the predetermined dimensions. For example, the updated first matrix may be an (N+1)×M matrix, where M denotes the length of the vectors in the codebook and is a positive integer greater than 1, and N is also a positive integer greater than 1. Then, the first matrix may be split into N+1 features to serve as the features of the predetermined dimensions. In this embodiment, the features of the predetermined dimensions are represented by the N+1 features (i.e., features of a first plurality of dimensions), wherein N features are features of a known dimension, and 1 feature is a feature of an unknown dimension. It should be noted that there may be a plurality of features that are features of the unknown dimension, but the present disclosure only takes one feature of the unknown dimension as an example. The generative adversarial model may also simultaneously extract (N+1) features, which can improve efficiency. Meanwhile, the (N+1) features are extracted by using the same model, so that the features can be well decoupled. In addition, the generative adversarial model has a discriminator, which can improve the accuracy of feature extraction by the generator in a training stage. Therefore, the accuracy of feature extraction can be improved by using the generative adversarial model.

At 306, K reference features are obtained using an encoder of a reference model, wherein the K reference features correspond to K dimensions, and K is a positive integer greater than or equal to 1. The K reference features are used to indicate reference representations of corresponding dimensions. For example, for three features A, B, and C, a reference feature of the distance dimension serves as feature D. A similarity between each feature and feature D is calculated, and the feature with the highest similarity can be considered as the feature for the distance dimension. The reference model is similar to the machine learning model 112, both of which are based on deep learning technology. The reference model is used to extract a reference feature of each dimension. In this embodiment, only the features extracted by the reference model need to be obtained; thus, only the results obtained by processing of the encoder are required, while a decoder for restoring features into an image is not required. In some embodiments, the K reference features are obtained by means of a reference model trained using contrastive learning techniques.

Taking the reference feature of the distance dimension as an example, this embodiment includes: obtaining a first image including the content of the distance dimension and a second image including the content of other dimensions (as a negative sample), and generating a plurality of enhanced images as positive samples according to the first image, wherein each enhanced image includes the content of the distance dimension. For example, the plurality of positive samples may be generated using an image-related data enhancement technique, such as an image flipping technique, a color jitter technique, etc. This embodiment further includes determining a loss between the plurality of positive samples and the first image as a first loss. This embodiment further includes determining a loss between the negative sample and the first image as a second loss.

To enable the reference model to accurately extract features of a first dimension, it is necessary to continuously reduce the loss between the positive samples and the first image, and continuously increase the loss between the negative sample and the first image. Therefore, this embodiment further includes adjusting parameters of the reference model according to the first loss and the second loss. The reference model obtained by training in this way can accurately extract the features of the first dimension. Therefore, simply by inputting into the reference model a plurality of images including the content of the first dimension, the reference model can obtain a plurality of features of the first dimension via encoding, and an average value of the plurality of features of the first dimension may serve as a reference feature of the first dimension. Similarly, reference features of other dimensions can also be obtained by using similarly trained reference models. This embodiment can provide a simple implementation for calculating each reference feature. Furthermore, because the reference feature can be used to distinguish between the positive samples and the negative sample, the reference feature can be sufficiently decoupled from reference features of other dimensions, so that the identification result has high accuracy.

At 308, a feature of an unknown dimension is determined from the (N+1) features and the K reference features, where (N+1) is greater than or equal to K. In some embodiments, the (N+1) features include the features of the known dimension and the feature of the unknown dimension, and a second plurality of reference features are all reference features of the known dimension, so the first plurality is greater than the second plurality. In some embodiments, a null vector may be used as the reference feature of the unknown dimension, and in this case, the first plurality is equal to the second plurality. The matching principles in the two embodiments are consistent, and the following explanation is given using an example in which no reference feature of the unknown dimension is configured.

In the process of determining the feature of the unknown dimension, the (N+1) features need to be matched against the K reference features. In some embodiments, a plurality of matching patterns are determined. It can be known from the above description that, in this example, N = K, so there are N matching patterns if N features are selected from the (N+1) features to be matched against the K reference features, wherein for each matching pattern, one feature among the (N+1) features will be outside the matching pattern, and said feature is considered a non-matching feature, i.e., the feature of the unknown dimension.

This embodiment further includes determining a matching score for each matching pattern according to a similarity between the feature of each dimension and each reference feature. In an embodiment, a similarity between the feature of each dimension and each reference feature can be determined. For example, a cosine similarity between the feature of each dimension and each reference feature may be calculated to serve as the similarity between the two, a Euclidean distance may also be calculated to serve as the similarity between the two, and so on. Thus, (N+1) similarities can be obtained. In an embodiment, for each matching pattern, a feature corresponding to the lowest similarity among the (N+1) similarities is deleted, and the remaining N features are used as the features corresponding to the matching pattern. Thus, each matching pattern corresponds to only N features. In an embodiment, the matching score for each matching pattern is determined by performing weighted summation on N similarities. For example, the matching score for each matching pattern may be determined by weighted averaging. Thus, N matching scores can be obtained.

The embodiment further includes determining, among the N matching scores, a matching pattern with the highest matching score as a target matching pattern, and determining, among the (N+1) features, a feature (that is, a non-matching feature) outside the target matching pattern as the feature of the unknown dimension. In the matching process, the feature of the unknown dimension can be accurately determined from the features of the predetermined dimensions. At 310, a target image is generated according to the feature of the unknown dimension. The target image is generated using, for example, the decoder introduced in the above embodiment. In this embodiment, not only can decoupled and accurate features be quickly extracted, but decoupled reference features can also be obtained, so that the feature of the unknown dimension can be fully decoupled and accurately determined.

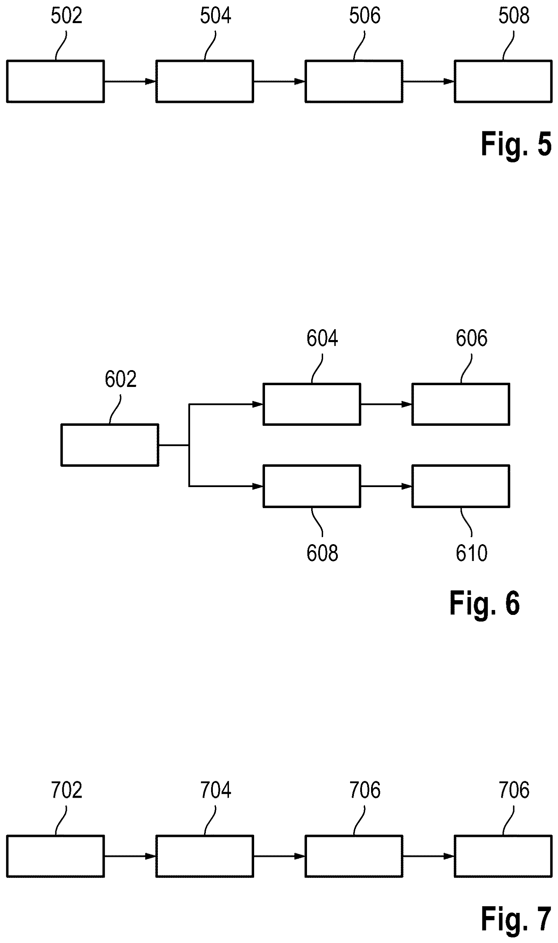

Fig. 5 shows a schematic diagram of a method for processing an image according to an embodiment of the present disclosure. At 502, a plurality of source images are obtained. Similar to the aforementioned embodiments, each source image includes the content of predetermined dimensions. At 504, by means of a machine learning model and contrastive learning, a feature of an unknown dimension of each source image is determined, and a plurality of target images are generated on the basis of the plurality of features of an unknown dimension, and labels of these target images may be set to "unknown". At 506, these target images and the labels thereof are used to train or test a specified model. Training the specified model means enabling the specified model to identify the content of the unknown dimension while making a correct response. Testing the specified model means detecting whether the specified model can make a correct response to the content of the unknown dimension, for example, making a sufficiently safe response.

At 508, the specified model trained using these target images and the labels thereof can be determined as a validated safety model. Alternatively, the specified model tested through these target images and the labels thereof may be determined as a validated safety model. Using the target images to test the safety of the specified model can effectively improve the test efficiency and the reliability of test results. Using the target images to perform safety training of the specified model can effectively improve the cognitive dimension of the specified model and improve the safety of the specified model.

Fig. 6 shows a schematic diagram of a method for processing an image according to the present disclosure. At 602, a plurality of target images are generated according to the aforementioned embodiment, with labels set to "unknown". At 604, the plurality of target images are input into a specified model to obtain a plurality of prediction results (i.e., target outputs). At 606, the robustness or safety of the specified model is determined according to the prediction results of the specified model. If the prediction results of the specified model meet requirements, it indicates strong robustness or high safety. At 608, the plurality of target images are input into the specified model to obtain a plurality of prediction results. At 610, parameters of the specified model are adjusted according to the prediction results of the specified model in combination with a loss function, so that the specified model can identify the content of the unknown dimension and make a correct response, thereby improving the safety of the specified model.

Fig. 7 shows a schematic diagram of training a machine learning model according to an embodiment of the present disclosure. In this embodiment, at 702, a plurality of image samples are obtained, wherein each image sample has labels of known dimensions (such as labels of brightness and distance dimensions) and a label of an unknown dimension (such as a label indicating whether a tree is included). At 704, these image samples are input into a machine learning model for inference. For example, the machine learning model may be a generative adversarial network including a generator and a discriminator. The generator is used to extract features of multiple dimensions (i.e., features of predetermined dimensions) for the image samples.

At 706, for example, after discrimination by the discriminator, a feature of each dimension is obtained. For example, the discriminator determines that a generated first feature is a feature of a first dimension, indicating whether a tree is included, a generated second feature is a feature of a second dimension, indicating whether brightness information or a brightness value is included, and so on. At 708, the machine learning model is trained using the plurality of image samples to adjust the machine learning model. For example, on the basis of the labels and the features or on the basis of the prediction results for the features, a loss function is used to determine a loss, and then respective parameters of the machine learning model is corrected according to the loss. By the training method of this embodiment, the machine learning model can be trained to simultaneously extract features of multiple dimensions from one image sample, and decouple the features of the multiple dimensions.

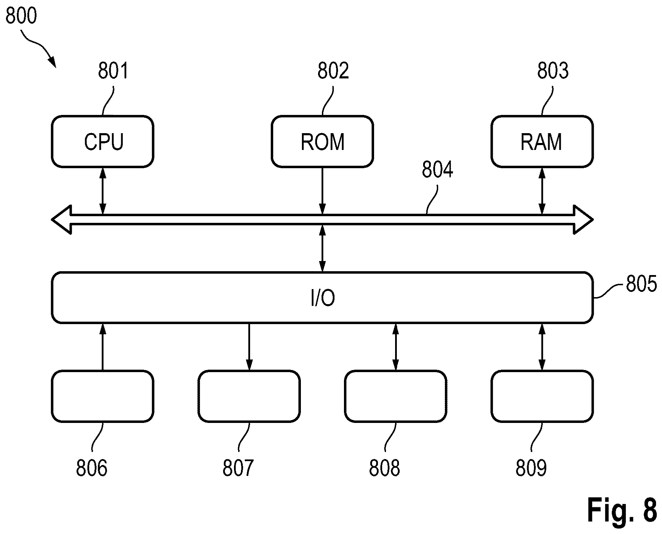

Fig. 8 is a schematic block diagram of a device 800 that can be used to implement an embodiment of the present disclosure. The device 800 may be a device or an apparatus described in an embodiment of the present disclosure. As shown in Fig. 8, the device 800 includes a central processing unit (CPU) 801, which may perform various appropriate actions and processing according to computer program instructions stored in a read-only memory (ROM) 802 or computer program instructions loaded from a storage unit 808 into a random access memory (RAM) 803. Various programs and data required for the operations of the device 800 may also be stored in the RAM 803. The CPU 801, the ROM 802, and the RAM 803 are connected to each other via a bus 804. An input/output (I/O) interface 805 is also connected to the bus 804.

A plurality of components in the device 800 are connected to the I/O interface 805, including: an input unit 806, such as a keyboard, a mouse, etc.; an output unit 807, such as various types of displays, speakers, etc.; a storage unit 808, such as a magnetic disk, an optical disk, etc.; and a communication unit 809, such as a network interface card, a modem, a wireless communication transceiver, etc. The communication unit 809 allows the device 800 to exchange information/data with other devices through a computer network such as the Internet and/or various telecommunication networks.

The various methods or processes described above may be performed by the processing unit 801. For example, in some embodiments, the method may be implemented as a computer software program that is tangibly included in a machine-readable medium, such as the storage unit 808. In some embodiments, part or all of the computer program may be loaded and/or installed onto the device 800 via the ROM 802 and/or the communication unit 809. When the computer program is loaded to the RAM 803 and executed by the CPU 801, one or more steps or actions in the methods or processes described above may be performed.

In some embodiments, the methods and processes described above may be implemented as a computer program product. The computer program product may include a computer-readable storage medium having computer-readable program instructions thereon for performing various aspects of the present disclosure.

The computer-readable storage medium may be a tangible device that can maintain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disc read-only memory (CD-ROM), a digital versatile disc (DVD), a memory stick, a floppy disk, a mechanically encoded device, such as a punch card or a raised structure in a groove having instructions stored thereon, and any suitable combination of the foregoing. The computer-readable storage medium used here is not interpreted as a transient signal itself, such as a radio wave or other freely propagating electromagnetic waves, an electromagnetic wave propagating through a waveguide or other transmission media (e.g., an optical pulse through a fiber optic cable), or an electrical signal transmitted through a wire.

The computer-readable program instructions described herein may be downloaded from a computer-readable storage medium to various computing/processing devices, or downloaded to an external computer or external storage device via a network, such as the Internet, a local area network, a wide area network, and/or a wireless network. The network may include copper transmission cables, optical fiber transmission, wireless transmission, routers, firewalls, switches, gateway computers and/or edge servers. A network adapter card or network interface in each computing/processing device receives computer-readable program instructions from the network and forwards the computer-readable program instructions for storage in computer-readable storage media within the respective computing/processing devices.

The computer program instructions for performing the operations of the present disclosure may be assembly instructions, instruction set architecture (ISA) instructions, machine instructions, machine-related instructions, microcodes, firmware instructions, state setting data, or source codes or object codes written in any combination of one or more programming languages, wherein the programming languages include object-oriented programming languages and conventional procedural programming languages. The computer-readable program instructions may be executed entirely on a user computer, partly on the user computer, as a stand-alone software package, partly on the user computer and partly on a remote computer, or entirely on the remote computer or a server. In a case where a remote computer is involved, the remote computer may be connected to a user computer via any kind of network, including a local area network (LAN) or a wide area network (WAN), or may be connected to an external computer (for example, connected via the Internet using an Internet service provider). In some embodiments, electronic circuitry such as programmable logic circuitry, field-programmable gate arrays (FPGA), or programmable logic arrays (PLA) is customized by utilizing state information of the computer-readable program instructions, and may execute the computer-readable program instructions so as to perform various aspects of the present disclosure.

These computer-readable program instructions may be provided to a processing unit of a general-purpose computer, a special-purpose computer, or another programmable data processing apparatus, thereby producing a machine, such that these instructions, when executed by the processing unit of the computer or another programmable data processing apparatus, produce an apparatus for implementing functions/actions specified in one or more blocks in the flowcharts and/or block diagrams. These computer-readable program instructions may also be stored in a computer-readable storage medium, and these instructions cause a computer, a programmable data processing apparatus, and/or other devices to work in a particular manner, so that the computer-readable medium storing the instructions includes an article of manufacture including instructions for implementing various aspects of the functions/actions specified in one or more blocks in the flowcharts and/or block diagrams.

The computer-readable program instructions may be loaded onto a computer, another programmable data processing apparatus, or another device so that a series of operational steps are performed on the computer, another programmable data processing apparatus, or another device to produce a computer-implemented process. As a result, the instructions executed on the computer, another programmable data processing apparatus, or another device implement the functions/actions specified in one or more blocks in the flowcharts and/or block diagrams.

The flowcharts and block diagrams in the accompanying drawings show the architecture, functions, and operations of possible implementations of the device, method, and computer program product according to multiple embodiments of the present disclosure. In this regard, each block in the flowcharts or block diagrams may represent a module, a program segment, or a portion of instructions, which includes one or more executable instructions for implementing a specified logical function(s). In some alternative implementations, the functions marked in the blocks may occur in a different order than those marked in the figures. For example, two consecutive blocks may, in practice, be executed substantially concurrently, or the blocks may sometimes be executed in the reverse order, depending upon the functionality involved. It should also be noted that each block in the block diagrams and/or flowcharts, and combinations of blocks in the block diagrams and/or flowcharts, may be implemented by a dedicated hardware-based system that performs the specified functions or actions, or may be implemented by a combination of dedicated hardware and computer instructions.

The embodiments of the present disclosure have been described above, and the above description is exemplary, not exhaustive, and is not limited to the disclosed embodiments. Many modifications and variations will be apparent to those of ordinary skill in the art without departing from the scope and spirit of the described embodiments. The selection of the terms used herein is intended to best explain the principles, practical applications, or technological improvements to the technology in the market, of various embodiments, or to enable other ordinary persons skilled in the art to understand the various embodiments disclosed herein.

## Claims

1. A method for processing an image, comprising:
extracting, by means of a machine learning model, features of predetermined dimensions from a source image, wherein the predetermined dimensions comprise a known dimension and an unknown dimension in a training dataset of the machine learning model;
determining a feature of the unknown dimension from the features of the predetermined dimensions; and
on the basis of the feature of the unknown dimension, generating a target image corresponding to the source image.

2. The method according to claim 1, wherein extracting, by means of a machine learning model, features of predetermined dimensions from a source image comprises:
compressing the source image into a first matrix;
updating the first matrix by performing matching for features of each dimension in the first matrix against a plurality of discrete features in a codebook of the machine learning model; and
using the features of each dimension in the updated first matrix as the features of the predetermined dimensions.

3. The method according to claim 2, wherein the features of the predetermined dimensions comprise features of a first plurality of dimensions, and determining a feature of the unknown dimension from the features of the predetermined dimensions comprises:
obtaining a second plurality of reference features using an encoder of a reference model,
wherein the second plurality of reference features corresponds to the second plurality of dimensions; and
determining the feature of the unknown dimension according to the features of the first plurality of dimensions and the second plurality of reference features, wherein the first plurality is greater than or equal to the second plurality.

4. The method according to claim 3, wherein the first plurality is greater than the second plurality, and determining the feature of the unknown dimension according to the features of the first plurality of dimensions and the second plurality of reference features comprises:
determining a plurality of matching patterns according to the features of the first plurality of dimensions and the second plurality of reference features;
determining a matching score for each matching pattern according to a similarity between a feature of each dimension and each reference feature;
determining a matching pattern with the highest matching score as a target matching pattern; and
determining the feature of the unknown dimension according to a feature among the features of the first plurality of dimensions that is outside the target matching pattern.

5. The method according to claim 4, wherein determining a matching score for each matching pattern according to a similarity between a feature of each dimension and each reference feature comprises:
determining the similarity between the feature of each dimension and each reference feature;
updating features corresponding to each matching pattern by deleting a feature with the lowest similarity; and
determining the matching score for each matching pattern by performing weighted summation on similarities of the features corresponding to each matching pattern.

6. The method according to claim 1, wherein determining a target image according to a feature of the unknown dimension comprises:
obtaining the target image by decoding the feature of the unknown dimension using a decoder.

7. The method according to claim 1, further comprising:
obtaining a plurality of image samples, wherein each image sample has a label of a known dimension and a label of an unknown dimension; and
adjusting the machine learning model by training the machine learning model using the plurality of image samples.

8. The method according to claim 3, further comprising:
obtaining a first image comprising content of a first dimension and a second image comprising content of a second dimension;
generating a plurality of enhanced images according to the first image, wherein each enhanced image comprises the content of the first dimension;
determining a loss between the plurality of enhanced images and the first image as a first loss;
determining a loss between the second image and the first image as a second loss; and
adjusting parameters of the reference model according to the first loss and the second loss.

9. The method according to claim 1, further comprising:
determining a target output by inputting the target image into a specified model; and
adjusting the specified model according to the target output.

10. The method according to claim 1, further comprising:
determining a target output by inputting the target image into a specified model; and
testing the specified model by testing the target output.

11. An electronic device, comprising:
a processor; and
a memory coupled to the processor and having instructions stored therein, wherein the instructions, when executed by the processor, cause the device to perform the method according to any one of claims 1 to 10.

12. A computer-readable storage medium, having computer-executable instructions stored thereon, wherein the computer-executable instructions, when executed, cause a computer to perform the method according to any one of claims 1 to 10.

13. A computer program product, tangibly stored on a non-volatile computer-readable medium and comprising machine-executable instructions, wherein the machine-executable instructions, when executed, cause a machine to perform the method according to any one of claims 1 to 10.
